# EUROPÄISCHE PATENTSCHRIFT

(11) **EP 1 830 093 B1**
(45) Veröffentlichungstag und Bekanntmachung des Hinweises auf die Patenterteilung: **27.02.2008**
(21) Anmeldenummer: 06004316.3
(22) Anmeldetag: 03.03.2006
(51) Int. Cl.: F16D 23/14

(54) **Ausrückvorrichtung für eine Kraftfahrzeug-Reibungskupplung mit einer Ausfallsicherung**
Clutch release device with a failsafe mechanism for a motor vehicle friction clutch
Butée d'embrayage avec un mécanisme de sécurité pour véhicule automobile

(43) Veröffentlichungstag der Anmeldung: 05.09.2007
(73) Patentinhaber: ZF FRIEDRICHSHAFEN AG, 88046 Friedrichshafen (DE)
(72) Erfinder: Otto, Thomas, Dr., 97424 Schweinfurt (DE); Voit, Herbert, 97422 Schweinfurt (DE)

(56) Entgegenhaltungen:
- DE-U1- 8 706 645
- GB-A- 385 039
- US-A- 4 555 190

## Beschreibung

Die Erfindung betrifft eine Ausrückvorrichtung für eine Kraftfahrzeug-Reibungskupplung mit einer Ausfallsicherung gemäß dem Oberbegriff des Patentanspruchs 1. Eine solche Ausrückvorrichtung ist aus DE-U-8 706 645.9 bekannt.

Ausrückvorrichtungen der gattungsgemäßen Art zur Betätigung von Kraftfahrzeug-Reibungskupplungen sind hinreichend bekannt. Beispielhaft wird hierzu auf die in den Druckschriften DE 43 04 964 C2 und DE 195 48 859 C1 offenbarten Vorrichtungen, die beide vom "gezogenen Typ" sind, verwiesen. Eine solche Ausrückvorrichtung kann jedoch auch als "gedrückter Typ" ausgeführt sein können, wie z.B. in der DE 101 36 424 C1 offenbart. Derartige Ausrückvorrichtungen umfassen als eine Hauptkomponente ein als Wälzlager ausgebildetes Ausrücklager, welches die Wirkverbindung zwischen einem um die Kupplungsachse rotierenden Ausrückorgan, z.B. einer Membranfeder, und einem dazu drehfesten Betätigungselement, z.B. einer Kupplungsgabel, herstellt. Das Ausrücklager, welches üblicherweise als Radial- oder Schrägkugellager ausgeführt ist, unterliegt neben hohen Radialkräften insbesondere bei einer Betätigung der Reibungskupplung extremen Axialkräften. Es kann in der Praxis bspw. in Verbindung mit einer ungenügenden Schmierung des Ausrücklagers vorkommen, dass dieses heiß läuft und in dessen Folge ein in dem Wälzlager üblicherweise aus Kunststoff gefertigter Kugelkäfig zerstört wird und die gegenseitige Beabstandung der Wälzkörper aufheben. Dieses kann wiederum zu einer Blockierung des Wälzlagers und zu einer unerwünschten gegenseitigen axialen Verschiebung der Lagerringe führen, wobei im ungünstigsten Fall der Zusammenhalt der Lagerringe nicht länger aufrechterhalten werden kann und bei einer Kupplung vom gezogenen Typ der mit dem Ausrückorgan in Wirkverbindung stehende Lagerring gegenüber dem anderen Lagerring axial abgetrennt wird, so dass die Reibungskupplung dadurch nicht länger betätigt werden kann. Dieses Problem kann gleichermaßen auch bei einer Ausrückvorrichtung vom gedrückten Typ auftreten, wobei jedoch wegen der in Bezug auf den gezogenen Typ umgekehrten Kraftwirkungsrichtung die Lagerringe dabei nicht voneinander getrennt werden sondern axial ineinander geschoben werden können. Wenn dabei ein bestimmter Axialversatz überschritten wird, so kann auch ein solches Ausrücklager im Betrieb versagen. Im ungünstigsten Fall kann sich ein Fahrzeug mit einer derart defekten Ausrückvorrichtung nicht mehr aus eigener Kraft fortbewegen und muss abgeschleppt werden, obwohl das Antriebsaggregat und die gesamte Kraftübertragung zu den Antriebsrädern noch funktionsfähig ist.

Von diesem Problem ausgehend, stellt sich die Erfindung die Aufgabe, eine Ausrückvorrichtung bereitzustellen, die auch bei einem Ausfall des Wälzlagers eine Notlauffunktionalität bietet, um eine Betätigung einer Kraftfahrzeug-Reibungskupplung zumindest für einen begrenzten Zeitraum bzw. eine begrenzte Fahrstrecke zu ermöglichen.

Die Erfindung löst das gestellte Problem mit einer gattungsgemäßen Ausrückvorrichtung, welche zusätzlich das im Kennzeichen des Patentanspruchs 1 aufgeführte Merkmal aufweist.

Die Ausbildung der Arretiermittel selbst kann auf zahlreiche Weise erfolgen. Beispielweise können an beiden Lagerringen sich radial zumindest teilweise überlappende Flansche oder Ringstege aufweisen, die bei einem Defekt eine unzulässige Axialverlagerung des mit dem Ausrückorgan der Reibungskupplung durch axiale Anlage an den jeweils anderen Lagerring verhindern. Die dazu erforderlichen Flansche bzw. Ringstege können integral mit den Lagerringen ausgebildet sein oder auch als zusätzliche Teile axial gesichert an den Lagerringen angeordnet sein, wobei bekannte und dafür geeignete stoff-, form- oder kraftschlüssige Verbindungstechniken benutzt werden können.
Die zweiten Arretiermittel können beispielsweise auch als ein an der Schiebehülse axial fest angeordnetes Rohrelement ausgebildet sein, welches mit einem Ringkragen ausgeführt ist und wobei dieser zumindest teilweise radial überlappend zu dem ersten Arretiermittel angeordnet ist. Weiterhin kann z.B. auch eine zur Festlegung des Ausrücklagers an der Schiebehülse befestigte Halteklammer oder ein Halteblech mit einem zumeist ohnehin daran ausgeführten Radialabschnitt als zweites Arretiermittel fungieren.

Wenn an einer derart ausgebildeten Ausrückvorrichtung ein Lagerschaden auftritt, insbesondere ein Defekt am oder die Zerstörung des Kugelkäfigs, so können die an der Ausrückvorrichtung bei einer Betätigung der Reibungskupplung auftretenden Axialkräfte die beiden Lagerringe lediglich bis zu einem vorgebbaren Maß axial gegeneinander verlagern und zwar soweit bis die aus den Arretiermitteln gebildete Eingriffsformation eine noch weitere Axialverlagerung blockiert. Das Ausmaß der maximal möglichen Axialverlagerung wird vorteilhafterweise so gewählt, dass bei dessen Einnahme die Wälzkörper nun nicht mehr optimal, zumindest jedoch noch partiell an deren Laufbahnen anliegen und somit die Funktion des Ausrücklagers damit im Wesentlichen sichergestellt ist. Damit ist es auch einem Fahrzeug mit einer in der erläuterten Weise schadhaften Ausrückvorrichtung möglich, sich selbsttätig, d.h. ohne Abschlepphilfe, zumindest für einen begrenzten Rahmen fortzubewegen und z.B. eine Werkstatt zu erreichen.

Der vorstehend erläuterte Grundgedanke der Erfindung kann in der Praxis auf vielfältige Weise realisiert werden. Vorteilhafte Ausführungsformen und Weiterbildungen der Erfindung sind in den abhängigen Ansprüchen beschrieben.

Gemäß einer vorteilhaften Ausführung sind in einem Normalbetrieb, d.h. einem Betrieb der Ausrückvorrichtung mit einem ordnungsgemäß arbeitenden Ausrücklager, die ersten und die zweiten Arretiermittel nicht wirkverbunden oder stehen diese in einer im Wesentlichen kräftefreien Wirkverbindung. Für den Normalbetrieb ist es am günstigsten, wenn die Arretiermittel keine Auswirkungen auf diesen haben. Dazu kann vorteilhaft zwischen den Arretiermitteln ein Luftspalt ausgebildet sein, so dass eine gegenseitige Beeinflussung der Arretiermittel nicht gegeben ist. Alternativ können jedoch auch die zum Eingriff vorgesehenen Arretiermittel zwischen diesen ein Lager, bspw. ein Axialkugellager aufweisen, welches im Normalbetrieb im Wesentlichen axial unbelastet mitläuft.

Vorteilhafterweise gelangen die ersten und die zweiten Arretiermittel zur Gewährleistung eines Notlaufbetriebs der Ausrückvorrichtung in einen axialkraftbelasteten gegenseitigen Eingriff, sobald ein Defekt an dem Ausrücklager auftritt, welcher zu einer gegenseitigen axialen Verlagerung der Lagerringe des Ausrücklagers führt.

Wenn die Arretiermittel in einem Normalbetrieb axial voneinander beabstandet angeordnet sind und bei einem Lagerdefekt in gegenseitige Anlage geraten, so erweist es sich als überaus günstig, wenn die ersten und die zweiten Arretiermittel gleitpaarungsoptimierte Oberflächen aufweisen und, gemäß der Erfindung, im Defektfall ein Gleitlager ausbilden. Durch diese Maßnahme können Reibungsverluste reduziert und die Notlaufeigenschaften der Ausrückvorrichtung verbessert werden.
Die Aktivierung der erläuterten Eingriffsformation erfolgt für einen Fahrzeugführer im Defektfall unbemerkt, d.h. dieser hat keine Information darüber, dass überhaupt ein Defekt an der Ausrückvorrichtung vorliegt. Gemäß einer besonders bevorzugten Weiterbildung der Erfindung ist deshalb zur Erfassung des kraftbelasteten Eingriffs der Eingriffsformation eine Sensoranordnung vorgesehen, die einen solchen Zustand sensiert und diesen dem Fahrzeugführer optisch oder akustisch signalisiert.

Die vorgeschlagene Ausrückvorrichtung ist vom "gezogenen Typ".

Die Erfindung wird nachfolgend anhand der beiliegenden Zeichnung beispielhaft erläutert. Es zeigen:
- Fig. 1: eine Ausrückvorrichtung für eine gezogene Reibungskupplung in einem Axialschnitt gemäß dem Stand der Technik;
- Fig. 2: eine Ausrückvorrichtung gemäß Fig. 1, die einstückig mit den Lagerringen ausgebildete Arretiermittel zur Bildung einer Ausfallsicherung umfasst;
- Fig. 3: eine Ausrückvorrichtung gemäß Fig. 1, welche gesonderte Elemente zur Bildung einer Ausfallsicherung aufweist;
- Fig.: eine Ausrückvorrichtung gemäß Fig. 1; wobei zur Bildung einer Ausfallsicherung ein Abschnitt des Lagerinnenringes mit einer Halteklammer zusammenwirkt.

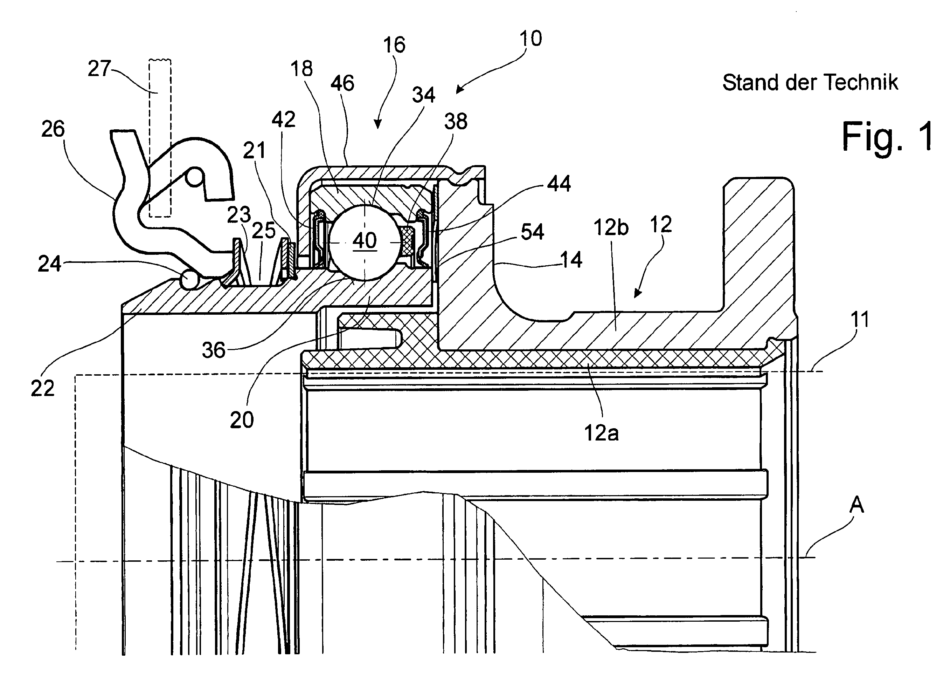

Fig. 1 zeigt eine in gezogener Bauweise ausgeführte Ausrückvorrichtung 10 zum Betätigen einer zeichnerisch nicht dargestellten Kraftfahrzeugreibungskupplung. Diese umfasst zunächst eine auf einem Führungsrohr axial verlagerbare, zweiteilige, aus einem Innenteil 1 2a und einem Außenteil 12b gebildete Schiebehülse 12 mit einem daran angeordneten Radialflansch 14 und ein an diesem befestigtes Ausrücklager 16, welches als Schrägkugellager ausgebildet ist. Das Kugellager 16 weist einen bezüglich der Schiebehülse 12 feststehenden ersten, radial äußeren Lagerring 18 und einen umlaufenden zweiten, radial inneren Lagerring 20 auf, welcher mittels eines Axialfortsatzes 22 über das Lager 16 hinaus verlängert ist und mittels eines Lastringes 24 und eines Ausrückringes 26 mit zeichnerisch nur teilweise dargestellte Zungenenden einer Membranfeder 27 in Wirkverbindung steht, welche das Ausrückorgan der zu betätigenden Reibungskupplung darstellt. Zur Gewährleistung einer spielfreien Anlage des Ausrückringes 26 an dem Lastring 24 dient eine Wellfeder 23, welche in einer am Lagerinnenring 20 ausgeformten Nut 25 eingesetzt ist und sich an einem Sicherungsring 21 axial am Lagerinnenring 20 abstützt.

Die Lagerringe 18, 20 weisen zueinander zugewandte Laufbahnen 34, 36 für eine Mehrzahl in einem Kugelkäfig 38 geführte und von diesem beabstandete Kugeln 40 auf. Zum Schutz vor dem Eindringen von Schmutz und gleichfalls vor dem Austreten von einem im Lagerinneren befindlichen Schmiermittel sind stirnseitig zwischen den Lagerringen 18, 20 zwei Berührungsdichtungen 42, 44 ausgeführt.

Der Radialflansch 14 trägt ein an diesem verrolltes Halteblech 46, welches den radial äußeren, feststehenden Lagerring 18 und die Dichtungen 42, 44 umgreift und somit das Wälzlager 16 axial an der Schiebehülse 12 festhält.

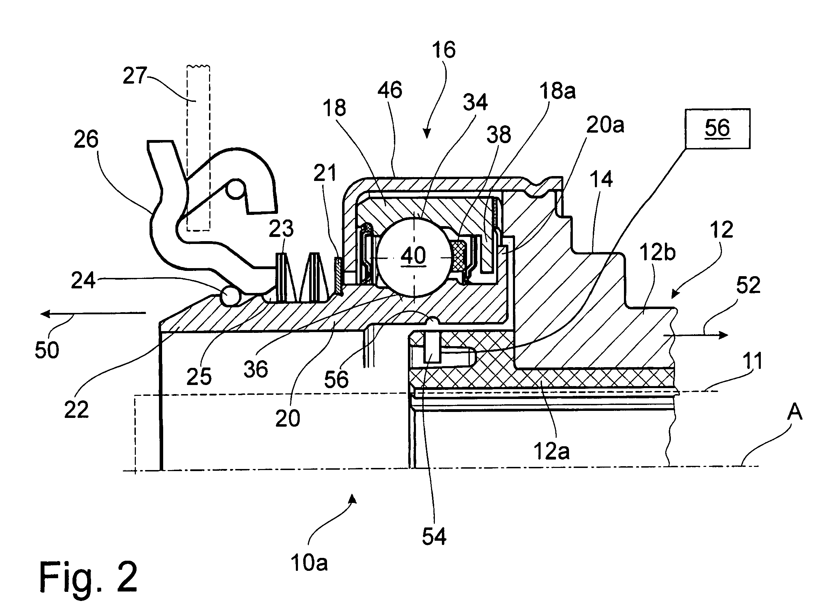

Fig. 2 zeigt eine Ausrückvorrichtung 10a, die in Bezug auf die vorstehenden Erläuterungen zu der Ausrückvorrichtung 10 zunächst identisch ausgebildet ist. Es ist zu erkennen, dass an der der Schiebehülse 12 zugewandten Axialseite des Ausrücklagers 16 die Lagerringe 18, 20 modifiziert sind. Der drehfest an dem Radialflansch 14 angeordnete Lageraußenring 18 ist mit einem nach radial innen gerichteten Ringsteg 18a und der mit dem Ausrückorgan wirkverbundene Lagerinnenring 20 ist mit einem nach radial außen gerichteten Ringsteg 20a versehen, die axial beabstandet sind und sich radial zumindest teilweise überlappen. Die beiden Ringstege 20a, 18a bilden als erste und zweite Arretiermittel 20a, 18a eine gemeinsame Eingriffsformation 48 bzw. eine Ausfallsicherung für die Ausrückvorrichtung 10a aus.

Allgemein weist der mit dem Ausrückorgan 27 in Wirkverbindung stehende Lagerring 20 die ersten Arretiermittel 20a auf und die zweiten Arretiermittel 18a sind axial fest zu der Schiebehülse 12 angeordnet. Die Arretiermittel 18a, 20a, in diesem Ausführungsbeispiel die Ringstege 18a, 20a, sind axial derart gestaffelt angeordnet, dass die zweiten Arretiermittel 18a vom ersten Arretiermittel 20a aus betrachtet in einer axialen Verlagerungsrichtung des ersten Arretiermittels 20a angeordnet sind, welche die in Fig. 2 mit Pfeil gekennzeichnete Kraftwirkungsrichtung 50 an dem mit dem Ausrückorgan 27 in Verbindung stehenden Lagerring 20 beim Ausrücken der gezogenen Reibungskupplung darstellt.

Im Normalbetrieb sind die ersten und die zweiten Arretiermittel 20a, 18a somit nicht wirkverbunden. Die durch die Eingriffsformation 20a, 18a erzeugte Ausfallsicherung wird erst aktiviert, wenn infolge eines Defekts am Ausrücklager, bspw. bei einem verschlissenen Kugelkäfig 38, durch die Kraftwirkung des Ausrückorgans 27 bei einem Ausrückvorgang in Richtung des mit Bezugsziffer 52 versehenen Pfeils die Lagerringe 18, 20 eine gegenseitige Axialverlagerung erfahren. Dabei wird die axiale Verlagerung des mit dem Ausrückorgan wirkverbundenen Lagerrings 20 über ein vorbestimmtes Ausmaß hinaus zu vermieden, indem die an diesem ausgebildeten Arretiermittel 20a auf die an dem anderen Lagerring 18 ausgebildeten zweiten Arretiermittel 18a auflaufen und dabei in einen axialkraftbelasteten gegenseitigen Eingriff gelangen, wodurch ein Notlaufbetrieb der Ausrückvorrichtung 10a gewährleistet wird. Die dabei gegenseitig zur Anlage kommenden Oberflächenbereiche der Ringstege 18a, 20a sind zur Verminderung der Reibung gleitpaarungsoptimiert ausgebildet. Dieses kann bspw. durch eine Kunststoffbeschichtung auf zumindest einem der Abschnitte 18a, 20a und/oder durch eine Optimierung der Kontaktgeometrie erfolgen, z.B. durch Ausbildung einer konvexen Anlagefläche zur Realisierung eines Linienkontaktes. Der gegenseitige Kontaktbereich kann zudem zusätzlich in Umfangsrichtung segmentiert ausgeführt sein, wodurch die Anlagefläche weiter reduziert wird.

Zur Erfassung eines Notlaufbetriebs, d.h. des kraftbelasteten Eingriffs der Eingriffsformation 18a, 20a umfasst die Ausrückvorrichtung 10a eine Sensoranordnung, die einen an der Schiebehülse angeordneten induktiven Sensor 54 und eine sich vom Material des Lagerinnenrings 20 hinsichtlich deren magnetischer Eigenschaften unterscheidende Markierung 56 umfasst, die z.B. in Form einer Ausnehmung oder eines Materialeinsatzes radial am Lagerinnenring und zu dem Sensor 54 radial gegenüberliegend ausgebildet ist. Eine, auf einen Defekt am Ausrücklager 10a hindeutende Änderung der gegenseitigen Axiallage der Lagerringe 18, 20 kann auf diese Weise einfach von dem Sensor 54 sensiert und über eine Signalleitung 55 und eine Auswerteschaltung 56 als wahrnehmbares Signal an den Fahrzeugführer übermittelt werden.

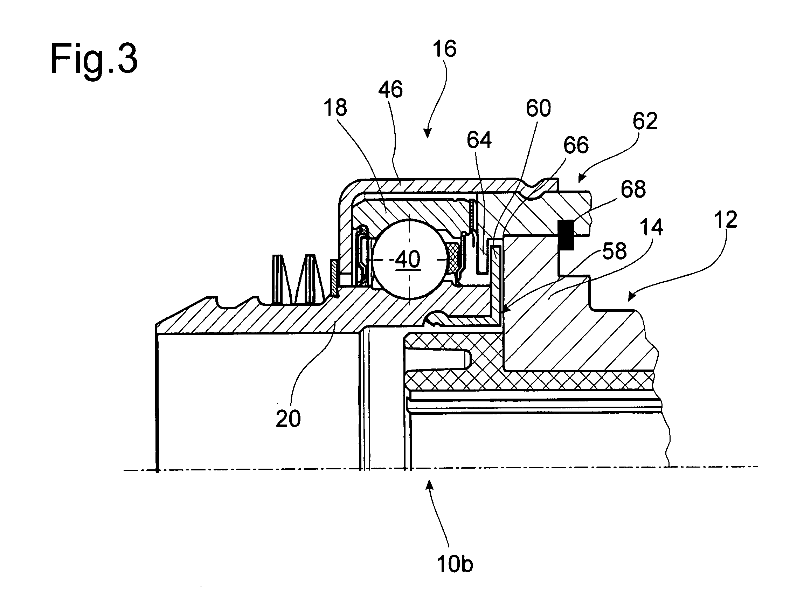

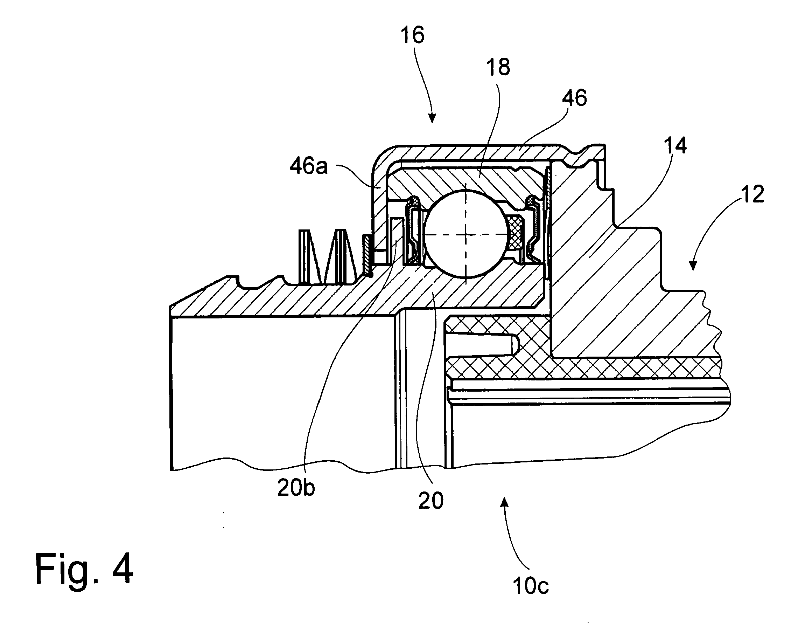

Die in den Fig. 3 und 4 dargestellten Ausführungsbeispiele zeigen zwei weitere Ausrückvorrichtungen 10b, 10c wobei auch hier der zur mit Wirkverbindung mit dem Ausrückorgan vorgesehene Lagerring 20 die ersten Arretiermittel aufweist und wobei die zweiten Arretiermittel axial fest zu der Schiebehülse 12 angeordnet sind. Die vorstehend anhand Fig. 2 erläuterte Funktionsweise der Ausfallsicherung trifft ebenso auf die nachstehend erläuterten Ausführungsbeispiele zu.

Die besondere Ausgestaltung ist in Fig. 3 darin zu sehen, dass das erste Arretiermittel durch ein an der Innenumfangsfläche des Lagerinnenrings 20 verrolltes Hülsenelement 58 gebildet wird, dessen Ringscheibenabschnitt 60 axial beabstandet und zumindest teilweise radial überlappend zu einem Radialkragen 64 eines an der Schiebehülse 12 angeordneten Rohrelements 62, welches das zweite Arretiermittel darstellt, angeordnet ist. Die axiale Festlegung des Rohrelements 62 an der Schiebehülse 12 erfolgt hierbei einerseits durch eine Durchmesserstufe 66 und andererseits durch einen Sicherungsring 68, der eine axiale Anlagefläche an der Schiebehülse 12 hintergreift. Das, das Ausrücklager 16 haltende Halteblech 46 ist dabei mit dem Rohrelement 62 verrollt.

In den Ausführungsbeispielen gemäß der Fig. 2 und 3 ist die Ausfallsicherung auf der, dem Radialflansch 14 zugewandten Seite des Ausrücklagers 16. Gemäß Fig. 4 besteht auch die Möglichkeit, die Ausfallsicherung an der dem Radialflansch 14 abgewandten Seite des Ausrücklagers 16 vorzusehen. Dazu ist am Lagerinnenring 20 als erstes Arretiermittel ein sich nach radial außen erstreckender Ringsteg 20b vorgesehen, der axial beabstandet und zumindest teilweise radial überlappend zu einem Radialabschnitt 46a des Halteblechs 46 angeordnet ist, welches das zweite Arretiermittel darstellt. Da das Halteblech 46 ohnehin an der Ausrückvorrichtung 10c vorgesehen ist, kann in diesem Fall auf besondere Vorkehrungen zur Ausbildung der zweiten Arretiermittel verzichtet werden.

In die mit den Fig. 3 und 4 erläuterten Ausrückvorrichtungen 10b, 10c kann ebenso eine Sensoranordnung zur Erfassung eines Notlaufbetriebs gemäß Fig. 2 integriert sein.

### Bezugszeichenliste

- 10, 10a: Ausrückvorrichtung
- 11: Führungsrohr
- 12: Schiebehülse
- 12a: Innenteil
- 12b: Außenteil
- 14: Radialflansch
- 16: Wälzlager, Ausrücklager
- 18: Lageraußenring
- 18a: Ringsteg
- 20: Lagerinnenring
- 20a,b: Ringsteg
- 21: Sicherungsring
- 22: Axialfortsatz
- 23: Wellfeder
- 24: Lastring
- 25: Nut
- 26: Ausrückring
- 27: Ausrückorgan, Membranfeder
- 34, 36: Laufbahn
- 38: Kugelkäfig
- 40: Kugeln
- 42, 44: Berührungsdichtung
- 46: Halteblech
- 46a: Radialabschnitt
- 48: Eingriffsformation, Ausfallsicherung
- 50: Kraftwirkungsrichtung
- 52: Ausrückrichtung
- 54: Sensor
- 55: Signalleitung
- 56: Markierung
- 58: Hülsenelement
- 60: Ringscheibenabschnitt
- 68: Sicherungsring
- 62: Rohrelement
- 64: Radialkragen
- 66: Durchmesserstufe
- 68: Sicherungsring

## Patentansprüche

1. Ausrückvorrichtung (10a, b, c) für eine Kraftfahrzeug-Reibungskupplung in gezogener Bauweise umfassend
- ein Führungsrohr (11),
- eine auf dem Führungsrohr (11) axial verlagerbare Schiebehülse (12),
- ein auf der Schiebehülse (12) angeordnetes Wälzlager (16) mit
- einem ersten, zu der Schiebehülse drehfesten Lagerring (18) und mit
- einem zweiten Lagerring (20), der sich in Wirkverbindung zu einem Ausrückorgan (27) der Reibungskupplung befindet und mit diesem um die Mittelachse (A) der Ausrückvorrichtung (10a, b, c) umläuft, wobei
- an den Lagerringen (18, 20) einander zugewandte Laufbahnen (34, 36) ausgebildet und
- zwischen den Lagerringen (18, 20) auf den Laufbahnen (34, 36) umlaufende Wälzkörper (40) angeordnet sind,
**dadurch gekennzeichnet,**
**dass** die Ausrückvorrichtung (10a, b, c) erste und zweite Arretiermittel (18a, 20a; 60, 64; 20b, 46a) zur Bildung einer Eingriffsformation umfasst, um eine im Wesentlichen axiale Verlagerung der Lagerringe (18, 20) über ein vorbestimmtes Ausmaß hinaus zu vermeiden, wobei der mit dem Ausrückorgan (27) in Wirkverbindung stehende Lagerring (20) die ersten Arretiermittel (20a, 60, 20b) aufweist und wobei die zweiten Arretiermittel (18a, 64, 46a) axial fest zu der Schiebehülse (12) angeordnet sind und wobei die ersten und die zweiten Arretiermittel (18a, 20a; 60, 64; 20b, 46a) im Defektfall des Wälzlagers (16) zur Gewährleistung eines Notlaufbetriebs der Ausrückvorrichtung (10a, b, c) in einen axialkraftbelasteten gegenseitigen Eingriff gelangen und ein Gleitlager ausbilden.

2. Ausrückvorrichtung nach Anspruch 1,
**dadurch gekennzeichnet,**
**dass** in einem Normalbetrieb die ersten und die zweiten Arretiermittel (18a, 20a; 60, 64; 20b, 46a) nicht wirkverbunden sind oder in einer im Wesentlichen kräftefreien Wirkverbindung stehen.

3. Ausrückvorrichtung nach Anspruch 1 oder 2,
**dadurch gekennzeichnet,**
**dass** die ersten und die zweiten Arretiermittel (18a, 20a; 60, 64; 20b, 46a) gleitpaarungsoptimierte Oberflächen aufweisen.

4. Ausrückvorrichtung nach einem der vorhergehenden Ansprüche,
**dadurch gekennzeichnet,**
**dass** die Ausrückvorrichtung (10a) zur Erfassung des kraftbelasteten Eingriffs der Eingriffsformation (18a, 20a) eine Sensoranordnung (54, 56) umfasst.

## Claims

1. Release device (10a, b, c) for a motor vehicle friction clutch of pulled design, comprising
- a guide tube (11),
- a sliding sleeve (12) which is axially movable on the guide tube (11),
- a rolling bearing (16) which is arranged on the sliding sleeve (12) having
- a first bearing ring (18) which is rotationally fixed with respect to the sliding sleeve and having
- a second bearing ring (20) which is operatively connected to a release element (27) of the friction clutch and with which said release element (27) rotates around the central axis (A) of the release device (10a, b, c), with
- raceways (34, 36) which face towards one another being formed on the bearing rings (18, 20) and
- rolling bodies (40) which run around on the raceways (34, 36) being arranged between the bearing rings (18, 20),
**characterized**
**in that** the release device (10a, b, c) comprises first and second locking means (18a, 20a; 60, 64; 20b, 46a) for forming an engagement formation in order to prevent a substantially axial movement of the bearing rings (18, 20) beyond a predetermined amount, with the bearing ring (20) which is operatively connected to the release element (27) having the first locking means (20a, 60, 20b) and with the second locking means (18a, 64, 46a) being arranged so as to be axially fixed with respect to the sliding sleeve (12), and with the first and the second locking means (18a, 20a; 60, 64; 20b, 46a) passing into axial-force-loaded engagement with one another, and forming a plain bearing, in the event of a defect of the rolling bearing (16) in order to ensure an emergency running mode of the release device (10a, b, c).

2. Release device according to Claim 1,
**characterized**
**in that**, in a normal mode, the first and the second locking means (18a, 20a; 60, 64; 20b, 46a) are not operatively connected or are operatively connected in a substantially force-free fashion.

3. Release device according to Claim 1 or 2,
**characterized**
**in that** the first and the second locking means (18a, 20a; 60, 64; 20b, 46a) have surfaces which are optimized for a sliding pairing.

4. Release device according to one of the preceding claims,
**characterized**
**in that** the release device (10a) comprises a sensor arrangement (54, 56) for detecting the force-loaded engagement of the engagement formation (18a, 20a).

## Revendications

1. Dispositif de débrayage (10a, 10b, 10c) pour un embrayage à friction de véhicule automobile à construction tirée, comprenant
- un tube de guidage (11),
- un manchon coulissant (12) axialement mobile sur le tube de guidage (11),
- un palier à roulement (16) disposé sur le manchon coulissant (12), avec
- une première bague de roulement (18) solidaire en rotation du manchon coulissant et avec
- une deuxième bague de roulement (20), qui se trouve en liaison fonctionnelle avec un organe de débrayage (27) de l'embrayage à friction et circule avec ce dernier autour de l'axe médian (A) du dispositif de débrayage (10a, 10b, 10c),
- sachant que des pistes de roulement (34, 36) se faisant face sont formées sur les bagues de roulement (18, 20)
- et que des éléments roulants (40) circulant sur les pistes de roulement (34, 36) sont disposés entre les bagues de roulement (18, 20),
**caractérisé en ce que** le dispositif de débrayage (10a, 10b, 10c) comprend des premiers et deuxièmes moyens de blocage (18a, 20a ; 60, 64 ; 20b, 46a) destinés à former une formation engagée afin d'empêcher un déplacement essentiellement axial des bagues de roulement (18, 20) au-delà d'un montant prédéfini, sachant que la bague de roulement (20) qui se trouve en liaison fonctionnelle avec l'organe de débrayage (27) présente les premiers moyens de blocage (20a, 60, 20b) et que deuxièmes moyens de blocage (18a, 64, 46a) sont disposées axialement fixement par rapport au manchon coulissant (12), et sachant que les premiers et les deuxièmes moyens de blocage (18a, 20a ; 60, 64 ; 20b, 46a) parviennent en un engagement mutuel sous l'action d'une force axiale en cas de défaillance du palier à roulement (16) afin d'assurer un fonctionnement de secours du dispositif de débrayage (10a, 10b, 10c), et forment un palier lisse.

2. Dispositif de débrayage selon la revendication 1, **caractérisé en ce que**, en fonctionnement normal, les premiers et les deuxièmes moyens de blocage (18a, 20a ; 60, 64 ; 20b, 46a) ne sont pas fonctionnellement reliés ou se trouvent dans une liaison fonctionnelle essentiellement sans force.

3. Dispositif de débrayage selon la revendication 1 ou 2, **caractérisé en ce que** les premiers et les deuxièmes moyens de blocage (18a, 20a ; 60, 64 ; 20b, 46a) présentent des surfaces optimisées en terme d'appariement glissant.

4. Dispositif de débrayage selon l'une quelconque des revendications précédentes, **caractérisé en ce que** le dispositif de débrayage (10a) comprend un ensemble de capteur (54, 56) pour détecter l'engagement de la formation engagée (18a, 20a) sous la sollicitation d'une force.
